# EUROPEAN PATENT APPLICATION

(11) **EP 4 207 590 A1**
(43) Date of publication of application: **05.07.2023**
(21) Application number: 21868383.7
(22) Date of filing: 18.08.2021
(51) Int. Cl.: H02S 50/10

(54) **FAULT DETECTION METHOD AND APPARATUS, AND PHOTOVOLTAIC POWER GENERATION SYSTEM**

(30) Priority: 18.09.2020 CN 202010989791
(71) Applicant: Huawei Digital Power Technologies Co., Ltd., Shenzhen, Guangdong 518043 (CN); Spic Qinghai Photovoltaic Industry Innovation Center Co., Ltd., Xining, Qinghai 810000 (CN)
(72) Inventor: WANG, Jianqiang, Shenzhen, Guangdong 518129 (CN); MENG, Yuandong, Shenzhen, Guangdong 518129 (CN); WAN, Song, Shenzhen, Guangdong 518129 (CN); ZHANG, Yanzhong, Shenzhen, Guangdong 518129 (CN); CHONG, Feng, Xining, Qinghai 810000 (CN); FAN, Hualong, Xining, Qinghai 810000 (CN); HE, Jiajia, Xining, Qinghai 810000 (CN); HOU, Shaopan, Xining, Qinghai 810000 (CN); ZHANG, Jie, Xining, Qinghai 810000 (CN)
(74) Representative: Thun, Clemens
(86) International application number: PCT/CN2021/113176
(87) International publication number: WO 2022/057555

(57) **Abstract**

A method and an apparatus (400) for performing fault detection, and a photovoltaic power generation system are provided, to increase fault detection efficiency of a photovoltaic module and reduce detection costs. The method includes: controlling, by a power station management system in a preset photovoltaic module order by using an inverter connected to a current to-be-detected photovoltaic module, the current to-be-detected photovoltaic module to be in a target status, and when determining that the current to-be-detected photovoltaic module is in the target status, controlling a mobile image capturing terminal to collect image data of the current to-be-detected photovoltaic module (S201), where the image data is used to detect a fault status of the current to-be-detected photovoltaic module; and when determining that the mobile image capturing terminal obtains the image data of the current to-be-detected photovoltaic module through collection, continuing, by the power station management system, to control, in the preset photovoltaic module order by using an inverter connected to a next to-be-detected photovoltaic module, the next to-be-detected photovoltaic module to be in the target status, until image data of all to-be-detected photovoltaic modules is obtained through collection (S202).

## Description

### CROSS-REFERENCE TO RELATED APPLICATIONS

This application claims priority to Chinese Patent Application No. 202010989791.0, filed with the China National Intellectual Property Administration on September 18, 2020, and entitled "METHOD AND APPARATUS FOR PERFORMING FAULT DETECTION, AND PHOTOVOLTAIC POWER GENERATION SYSTEM", which is incorporated herein by reference in its entirety.

### TECHNICAL FIELD

This application relates to the field of photovoltaic power generation technologies, and in particular, to a method and an apparatus for performing fault detection, and a photovoltaic power generation system.

### BACKGROUND

As photovoltaic technologies are applied on a large scale, application scenarios also become more diversified. Most photovoltaic power generation systems are located in remote areas, and photovoltaic modules in the photovoltaic power generation system are distributedly installed. Therefore, intelligent operation and maintenance become an inevitable development trend of photovoltaic power stations.

In a running process of the photovoltaic power generation system, fault detection needs to be performed on a running photovoltaic module, to ensure running safety of the photovoltaic power generation system and an energy yield of the photovoltaic power generation system. Currently, in most cases, an electroluminescence (electroluminescent, EL) detection method is used to perform fault detection on the photovoltaic module in the photovoltaic power generation system. In the EL detection manner, fault detection is performed on the photovoltaic module by using an image captured when the photovoltaic module is in a specific state.

During actual use, the EL detection manner is mainly manual detection, and a detection person needs to manually adjust an operating status of the photovoltaic module and to collect image data of the photovoltaic module. Photovoltaic modules are distributedly installed in a photovoltaic power station. Consequently, it is difficult to perform detection and detection efficiency is low.

Therefore, an existing manner of performing fault detection on a photovoltaic module still needs to be further studied.

### SUMMARY

This application provides a method and an apparatus for performing fault detection, and a photovoltaic power generation system, to increase fault detection efficiency of a photovoltaic module and reduce detection costs.

According to a first aspect, an embodiment of this application provides a method for performing fault detection. The method is applied to a photovoltaic power generation system including a plurality of photovoltaic modules, a plurality of inverters, and a power station management system. The method may be executed by the power station management system in the photovoltaic power generation system, and specifically includes the following steps: controlling, in a preset photovoltaic module order by using an inverter connected to a current to-be-detected photovoltaic module, the current to-be-detected photovoltaic module to be in a target status, and when determining that the current to-be-detected photovoltaic module is in the target status, controlling a mobile image capturing terminal to collect image data of the current to-be-detected photovoltaic module, where the image data is used to detect a fault status of the current to-be-detected photovoltaic module; and when determining that the mobile image capturing terminal obtains the image data of the current to-be-detected photovoltaic module through collection, continuing, by the power station management system, to control, in the preset photovoltaic module order by using an inverter connected to a next to-be-detected photovoltaic module, the next to-be-detected photovoltaic module to be in the target status, until image data of all to-be-detected photovoltaic modules is obtained through collection.

Based on the foregoing method, the power station management system may control the inverter and the mobile collection terminal to cooperatively operate, and sequentially collect, in the specified photovoltaic module order, image data that represents fault statuses of photovoltaic modules. During collection, no human intervention is required, thereby reducing fault detection difficulty of the photovoltaic module and increasing fault detection efficiency of the photovoltaic module.

In a possible design, the controlling, by using an inverter connected to a current to-be-detected photovoltaic module, the current to-be-detected photovoltaic module to be in a target status includes:
sending a first control signal to the inverter connected to the current to-be-detected photovoltaic module, where the first control signal is used to control the inverter connected to the current to-be-detected photovoltaic module to convert an operating status of the current to-be-detected photovoltaic module to the target status.

Based on the foregoing method, the current to-be-detected photovoltaic module may be controlled, by using the inverter connected to the to-be-detected photovoltaic module, to be in the specified state.

In a possible design, the controlling a mobile image capturing terminal to collect image data of the current to-be-detected photovoltaic module includes:
sending a second control signal to the mobile image capturing terminal, where the second control signal is used to control the mobile image capturing terminal to move to a location of the current to-be-detected photovoltaic module, and to collect the image data of the current to-be-detected photovoltaic module.

Based on the foregoing method, the power station management system may control the mobile image capturing terminal to collect and move to the current to-be-detected photovoltaic module in the target status, to obtain the image data that may represent whether a fault occurs in the photovoltaic module.

In a possible design, the determining that the current to-be-detected photovoltaic module is in the target operating status includes: receiving, by the power station management system, a status parameter of the current to-be-detected photovoltaic module sent by the inverter connected to the current to-be-detected photovoltaic module, and determining, based on the status parameter, whether the current to-be-detected photovoltaic module is in the target operating status.

Based on the foregoing method, when the current to-be-detected photovoltaic module is in the target status, the current to-be-detected photovoltaic module deviates from an original operating status, resulting in a change in the status parameter of the to-be-detected photovoltaic module. Therefore, whether the to-be-detected photovoltaic module is in the target operating status may be accurately determined by detecting the status parameter of the to-be-detected photovoltaic module.

In a possible design, the method for performing fault detection provided in this embodiment of this application further includes:
receiving image data collected by the mobile image capturing terminal, and determining, based on the image data, a fault status of a to-be-detected photovoltaic module corresponding to the received image data.

Based on the foregoing method, whether a fault occurs in the to-be-detected photovoltaic module may be accurately detected based on the image data that is of the to-be-detected photovoltaic module in the target operating status and that is collected by the mobile image capturing terminal.

In a possible design, the photovoltaic power generation system further includes a plurality of data collectors connected to the power station management system, and each of the data collectors is connected to some of the plurality of inverters; and the controlling, by using an inverter connected to a current to-be-detected photovoltaic module, the current to-be-detected photovoltaic module to be in a target status includes:
sending, by the power station management system, a third control signal to a target data collector, where the third control signal is used to control the target data collector to send the first control signal to the inverter connected to the current to-be-detected photovoltaic module, and the inverter connected to the current to-be-detected photovoltaic module is connected to the power station management system by using the target data collector.

Based on the foregoing manner, currently, in the power station management system in the photovoltaic power generation system, the data collectors are connected to the inverters in most cases. To ensure that the current to-be-detected photovoltaic module is accurately controlled to be in the target status, the power station management system may control, by using the data collector, the inverter to convert a state of the current to-be-detected photovoltaic module, so that the current to-be-detected photovoltaic module is in the target status.

According to a second aspect, an embodiment of this application provides an apparatus for performing fault detection. The apparatus for performing fault detection may include a processing unit.

The processing unit is configured to: control, in a preset photovoltaic module order by using an inverter connected to a current to-be-detected photovoltaic module, the current to-be-detected photovoltaic module to be in a target status, and when determining that the current to-be-detected photovoltaic module is in the target status, control a mobile image capturing terminal to collect image data of the current to-be-detected photovoltaic module, where the image data is used to detect a fault status of the current to-be-detected photovoltaic module; and when determining that the mobile image capturing terminal obtains the image data of the current to-be-detected photovoltaic module through collection, continue to control, in the preset photovoltaic module order by using an inverter connected to a next to-be-detected photovoltaic module, the next to-be-detected photovoltaic module to be in the target status, until image data of all to-be-detected photovoltaic modules is obtained through collection.

In a possible design, the apparatus for performing fault detection provided in the second aspect of this embodiment of this application further includes a transceiver unit. The processing unit is specifically configured to control the transceiver unit to send a first control signal to the inverter connected to the current to-be-detected photovoltaic module, where the first control signal is used to control the inverter connected to the current to-be-detected photovoltaic module to convert an operating status of the current to-be-detected photovoltaic module to the target status.

In a possible design, the processing unit is specifically configured to control the transceiver unit to send a second control signal to the mobile image capturing terminal, where the second control signal is used to control the mobile image capturing terminal to move to a location of the current to-be-detected photovoltaic module, and to collect the image data of the current to-be-detected photovoltaic module.

In a possible design, the transceiver unit is specifically configured to receive a status parameter of the current to-be-detected photovoltaic module sent by the inverter connected to the current to-be-detected photovoltaic module; and the processing unit is specifically configured to determine, based on the status parameter received by the transceiver unit, whether the current to-be-detected photovoltaic module is in the target operating status.

In a possible design, the transceiver unit is further configured to receive image data collected by the mobile image capturing terminal; and
the processing unit is further configured to determine, based on the image data received by the transceiver unit, a fault status of a to-be-detected photovoltaic module corresponding to the received image data.

In a possible design, the photovoltaic power generation system further includes a plurality of data collectors connected to the power station management system, and each of the data collectors is connected to some of the plurality of inverters; and
the processing unit is specifically configured to control the transceiver unit to send a third control signal to a target data collector, where the third control signal is used to control the target data collector to send the first control signal to the inverter connected to the current to-be-detected photovoltaic module, and the inverter connected to the current to-be-detected photovoltaic module is connected to the power station management system by using the target data collector.

According to a third aspect, an embodiment of this application provides a photovoltaic power generation system. The photovoltaic power generation system may include: a plurality of photovoltaic modules, a plurality of inverters, and a power station management system.

The plurality of photovoltaic modules are connected to the plurality of inverters. The power station management system is connected to the plurality of inverters. The power station management system may be configured to perform the method in any one of the first aspect or the possible designs.

Based on the architecture of the foregoing photovoltaic system, fault statuses of the plurality of photovoltaic modules in the photovoltaic power generation system may be detected, to rectify a fault in time, and ensure an energy yield of the photovoltaic power generation system.

### BRIEF DESCRIPTION OF DRAWINGS

FIG. 1 is a schematic diagram of a structure of a photovoltaic power generation system according to an embodiment of this application;
FIG. 2 is a schematic flowchart of a method for performing fault detection according to an embodiment of this application;
FIG. 3 is a schematic diagram of a moving route of a mobile image capturing terminal according to an embodiment of this application; and
FIG. 4 is a schematic diagram of a structure of an apparatus for performing fault detection according to an embodiment of this application.

### DESCRIPTION OF EMBODIMENTS

A method for performing fault detection provided in embodiments of this application may be applied to a photovoltaic power generation system, and is used to detect whether a fault occurs in a plurality of photovoltaic modules in the photovoltaic power generation system.

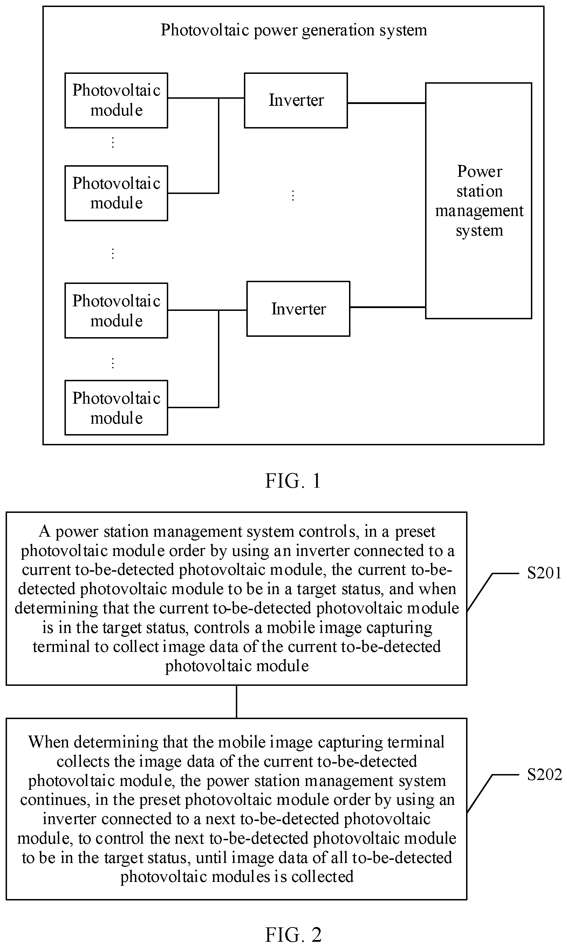

The following provides an application scenario of the photovoltaic power generation system. FIG. 1 is a possible schematic diagram of a structure of the photovoltaic power generation system. The photovoltaic power generation system may include a power station management system, a plurality of inverters, and a plurality of photovoltaic modules. The photovoltaic power generation system includes the plurality of inverters and the plurality of photovoltaic modules. Each of the inverters is connected to some of the plurality of photovoltaic modules. Each of the inverters may invert electric energy generated by the plurality of connected photovoltaic modules and output the inverted electric energy to a power grid. The power station management system is connected to the plurality of inverters, and is configured to: control operating statuses of the plurality of inverters and monitor a running status of the photovoltaic power generation system.

In a running process of the photovoltaic power generation system, fault detection needs to be periodically performed on the plurality of photovoltaic modules in the photovoltaic power generation system, to ensure an energy yield of the photovoltaic power generation system. Currently, in the method for performing fault detection on a photovoltaic module, after a detection person manually controls the photovoltaic module to be in a specific state, image data of the photovoltaic module in the specific state is usually collected by using an EL tester, fault detection is performed on the photovoltaic module based on the image data, to obtain a fault status of the photovoltaic module, and fault statuses of all the photovoltaic modules in the photovoltaic power generation system are obtained through detection in this manner. The fault status includes faulty and normal.

During actual use, the detection person manually adjusts the status of the photovoltaic module and collects the image data of the photovoltaic module. Photovoltaic modules are distributedly installed in a photovoltaic power station. Consequently, it is difficult to perform detection and detection efficiency is low. Therefore, the current manner of performing fault detection on a photovoltaic module has problems of high detection costs and low detection efficiency.

For the foregoing problem, embodiments of this application provide a method and an apparatus for performing fault detection, and a photovoltaic power generation system, to reduce fault detection costs of a photovoltaic module and increase fault detection efficiency.

In embodiments of this application, "or" is used to describe a relationship between related objects, indicating that there may be two relationships. For example, "A or B" may indicate the following cases: Only A exists and only B exists, where A and B may be singular or plural.

The term "connection" used in this application describes a connection relationship between two objects, and may indicate two types of connection relationships. For example, A and B are connected, which may indicate two cases: A and B are directly connected, and A is connected to B by using C.

In embodiments of this application, "example", "in some embodiments", "in another embodiment", and the like are used to indicate an example, an illustration, or a description. Any embodiment or design scheme described as an "example" in this application should not be explained as being more preferred or having more advantages than another embodiment or design scheme. Exactly, the word "an example" is used to specifically present a concept.

It should be noted that, in embodiments of this application, terms such as "first" and "second" are only used for a purpose of distinction in description, and should not be understood as an indication or implication of relative importance or an indication or implication of an order. In embodiments of this application, "equal to" may be used together with "greater than", and this is applicable to a technical solution used when "greater than" is used; or "equal to" may be used together with "less than", and this is applicable to a technical solution used when "less than" is used. It should be noted that, when "equal to" is used together with "greater than", "equal to" is not used together with "less than", or when "equal to" is used together with "less than", "equal to" is not used together with "greater than".

As shown in FIG. 2, an embodiment of this application further provides a method for performing fault detection. The method is applied to a photovoltaic power generation system including a plurality of photovoltaic modules, a plurality of inverters, and a power station management system, and is used to detect whether a fault occurs in the plurality of photovoltaic modules in the photovoltaic power generation system. The method for performing fault detection shown in FIG. 2 is executed by the power station management system in the photovoltaic power generation system, and may specifically include the following steps.

S201: The power station management system controls, in a preset photovoltaic module order by using an inverter connected to a current to-be-detected photovoltaic module, the current to-be-detected photovoltaic module to be in a target status, and when determining that the current to-be-detected photovoltaic module is in the target status, controls a mobile image capturing terminal to collect image data of the current to-be-detected photovoltaic module. The image data is used to detect a fault status of the current to-be-detected photovoltaic module. The photovoltaic module order may be set based on installation locations of photovoltaic modules, and is not specifically limited herein in this application.

The target status may be but is not limited to a reverse bias state of a string or any point in a volt-ampere characteristic curve (Variation of positive volt-ampere characteristics) of a string. When a reverse current is exerted on the string or a reverse voltage is exerted on two ends of the string, the string is in the reverse bias state of the string.

When no fault detection is performed on the photovoltaic module in the photovoltaic power generation system, the mobile image capturing terminal may be controlled to be in a standby state or a power-off state, and stay at a fixed location.

Optionally, if the power station management system is directly electrically connected to a plurality of inverters, when the power station management system controls, by using the inverter connected to the current to-be-detected photovoltaic module, the current to-be-detected photovoltaic module to be in the target status, the power station management system may directly send a first control signal to the inverter connected to the current to-be-detected photovoltaic module. The inverter controls a status of the current to-be-detected photovoltaic module in response to the first control signal, and switches the status of the current to-be-detected photovoltaic module to the target status.

During specific implementation, the power station management system is electrically connected to the plurality of inverters by using a data transmission line, and the power station management system may send, by using the data transmission line, the first control signal to the inverter connected to the current to-be-detected photovoltaic module.

In an example, if the target status is a reverse bias state of a voltage, after receiving the first control signal, the inverter connected to the current to-be-detected photovoltaic module exerts a reverse bias voltage on two ends of the current to-be-detected photovoltaic module that is connected, to control the status of the current to-be-detected photovoltaic module to switch to the reverse bias state of the voltage.

Optionally, if the photovoltaic power generation system includes a plurality of data collectors connected between the power station management system and the plurality of inverters, that is, the inverters are electrically connected to the power station management system by using the data collectors, and each of the data collectors is connected to some of the plurality of inverters, when the power station management system controls, by using the inverter connected to the current to-be-detected photovoltaic module, the current to-be-detected photovoltaic module to be in the target status, the power station management system may send a third control signal to a connected target data collector. The target data collector sends, in response to the third control signal, a first control signal to the inverter connected to the current to-be-detected photovoltaic module. The inverter controls the state of the current to-be-detected photovoltaic module that is connected, and switches the state of the current to-be-detected photovoltaic module to the target status. The inverter connected to the current to-be-detected photovoltaic module is electrically connected to the power station management system by using the target data collector.

During specific implementation, after the current to-be-detected photovoltaic module is controlled, by using the inverter connected to the current to-be-detected photovoltaic module, to be in the target status, a status parameter of the current to-be-detected photovoltaic module sent by the inverter connected to the current to-be-detected photovoltaic module is received, and whether the to-be-detected photovoltaic module is in the target status is determined based on the status parameter. The status parameter is used to represent a current status of the to-be-detected photovoltaic module. The status parameter of the to-be-detected photovoltaic module is determined by the inverter based on an electrical parameter that is output by the current to-be-detected photovoltaic module that is connected. The status parameter includes status information of the current to-be-detected photovoltaic module, and the status information may be but is not limited to a target status and a non-target status.

It should be understood that, if a status of the current to-be-detected photovoltaic module changes at a current moment, a value of the electrical parameter such as an output voltage, an output current, or an output power of the current to-be-detected photovoltaic module deviates from a value of an electrical parameter that is output at a previous moment. The inverter connected to the current to-be-detected photovoltaic module may determine, based on the electrical parameter that is output by the current to-be-detected photovoltaic module, whether the photovoltaic module is in the target status, and send the status parameter including the status information of the current to-be-detected photovoltaic module to the power station management system. The electrical parameter may be but is not limited to the output voltage, the output current, or the output power of the current to-be-detected photovoltaic module.

Specifically, after the power station management system determines that the current to-be-detected photovoltaic module is in the target status, the power station management system sends a second control signal to the mobile image capturing terminal. The mobile image capturing terminal moves to a location of the current to-be-detected photovoltaic module in response to the second control signal, collects the image data of the current to-be-detected photovoltaic module, and stores the collected image data of the current to-be-detected photovoltaic module or directly sends the collected image data of the current to-be-detected photovoltaic module to the power station management system.

Specifically, after the mobile image capturing terminal receives the second control signal, the mobile image capturing terminal moves from a location of a previous to-be-detected photovoltaic module to the location of the current to-be-detected photovoltaic module, and collects the image data of the current to-be-detected photovoltaic module.

The power station management system may determine the location of the current to-be-detected photovoltaic module based on electrical parameters that are output by the plurality of photovoltaic modules and that are sent by the plurality of directly connected inverters or the plurality of data collectors, or may be determined based on locations of the plurality of photovoltaic modules that are recorded during installation of the photovoltaic power generation system. Certainly, there are a plurality of manners of determining a location of a photovoltaic module. This is not specifically limited herein in this application.

S202. When determining that the mobile image capturing terminal obtains the image data of the current to-be-detected photovoltaic module through collection, the power station management system continues to control, in the preset photovoltaic module order by using an inverter connected to a next to-be-detected photovoltaic module, the next to-be-detected photovoltaic module to be in the target status, until image data of all to-be-detected photovoltaic modules is obtained through collection.

During specific implementation, when receiving state feedback information of collection completion sent by the mobile image capturing terminal, the power station management system determines that the mobile image capturing terminal obtains the image data of the current to-be-detected photovoltaic module through collection.

Optionally, after determining that the mobile image capturing terminal obtains the image data of the current to-be-detected photovoltaic module through collection, the power station management system sends a fourth control signal to the inverter connected to the current to-be-detected photovoltaic module. The fourth control signal is used to control the inverter connected to the current to-be-detected photovoltaic module to continue to adjust an operating status of the current to-be-detected photovoltaic module, to restore the status of the current to-be-detected photovoltaic module to a status used before adjustment is performed to the target status, thereby increasing optical-to-electrical conversion efficiency of the to-be-detected photovoltaic module, and ensuring an energy yield of the photovoltaic power generation system.

During specific implementation, after it is determined that the mobile image capturing terminal obtains the image data of the to-be-detected photovoltaic module through collection, the image data collected by the mobile image capturing terminal is received, and the fault status of the to-be-detected photovoltaic module corresponding to the received image data is determined based on the image data.

Optionally, after the mobile image capturing terminal obtains the image data of the to-be-detected photovoltaic module through collection each time, the image data of the current to-be-detected photovoltaic module sent by the mobile image capturing terminal is received, and the fault status of the current to-be-detected photovoltaic module is determined based on the received image data.

Optionally, after the mobile image capturing terminal obtains the image data of all the to-be-detected photovoltaic modules through collection, the image data of all the to-be-detected photovoltaic modules that is sent by the mobile image capturing terminal is received, the collected image data correspond to the to-be-detected photovoltaic modules based on a collection moment, and a fault status of each of all the to-be-detected photovoltaic modules is determined based on the received image data.

During specific implementation, after receiving the image data sent by the mobile image capturing terminal, the power station management system may perform fault detection on the received image data by using an electroluminescence EL detection algorithm, and determine, based on a fault detection result, the fault status of the to-be-detected photovoltaic module corresponding to the image data.

With reference to an application scenario of the photovoltaic power generation system shown in FIG. 1, by using an example in which a target status is a reverse bias state of a voltage, the following describes a process of detecting a fault status of a photovoltaic module by using the method for performing fault detection.

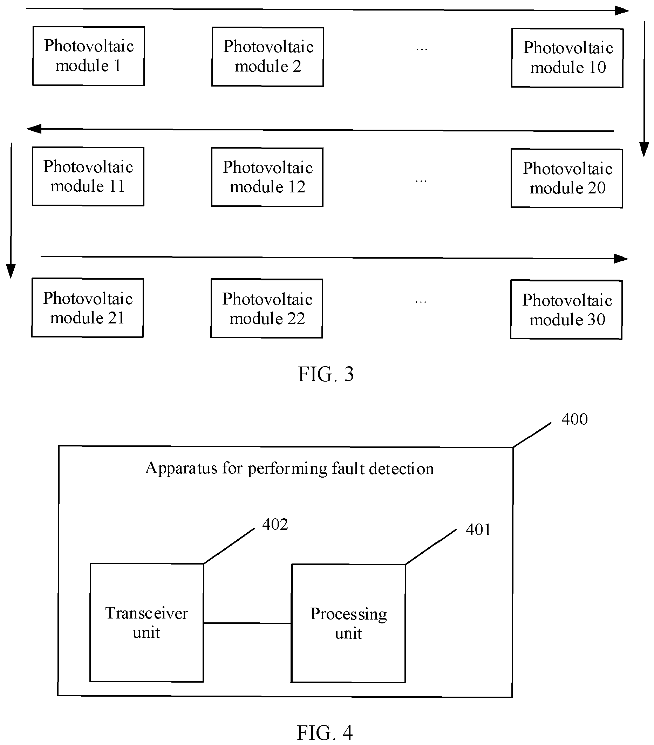

For example, the photovoltaic power generation system includes 30 photovoltaic modules, and distribution of all the photovoltaic modules in the photovoltaic power generation system is shown in FIG. 3. The power station management system sends a first control signal to a target inverter connected to a photovoltaic module 1. After receiving the first control signal, the target inverter exerts a reverse voltage to two ends of the photovoltaic module 1, and a status of the photovoltaic module 1 changes. The target inverter determines the status of the photovoltaic module 1 based on an electrical parameter that is output by the photovoltaic module 1, and when determining that the photovoltaic module 1 is currently in the target status, sends a status parameter of the photovoltaic module 1 to the power station management system. When receiving the status parameter of the photovoltaic module 1 sent by the target inverter and determining that the photovoltaic module 1 is in a target operating status, the power station management system sends a second control signal to the mobile image capturing terminal. When receiving the second control signal, the mobile image capturing terminal moves to a location corresponding to the photovoltaic module 1 to collect an image, to obtain image data corresponding to the photovoltaic module 1.

After receiving a collection success report sent by the mobile image capturing terminal, the power station management system determines that the mobile image capturing terminal obtains the image data of the photovoltaic module 1 through collection, and sends a fourth control signal to the target inverter. After receiving the fourth control signal, the target inverter cancels the reverse voltage exerted on the two ends of the photovoltaic module 1, and the status of the photovoltaic module 1 is restored from the target status to a state used before adjustment is performed to the target status, and the photovoltaic module 1 normally operates. In addition, a status of a photovoltaic module 2 is adjusted by controlling an inverter connected to the photovoltaic module 2. When it is determined that the photovoltaic module 2 is in the target status, the mobile image capturing terminal is controlled to move from the location of the photovoltaic module 1 to a location of the photovoltaic module 2, and to collect image data of the photovoltaic module 2. In the manner of collecting the image data of the photovoltaic module 1 and the image data of the photovoltaic module 2, the mobile image capturing terminal sequentially collects image data of the other photovoltaic modules in the photovoltaic power generation system, until the mobile image capturing terminal obtains image data of a photovoltaic module 30 through collection. A moving route of the mobile image capturing terminal is the same as a direction marked by an arrow in FIG. 3.

It should be understood that, in the foregoing manner of collecting image data of a photovoltaic module, the mobile image capturing terminal performs collection in the preset photovoltaic module order, and a distance between movement locations for data collection performed by the mobile image capturing terminal twice is reduced, so that the mobile image capturing terminal can quickly move to a next location for image data collection. Therefore, energy losses in a process in which the mobile image capturing terminal collects image data can be reduced, and detection efficiency can be increased.

Certainly, the foregoing preset photovoltaic module order is merely an example. During actual use, another order may be used. For example, the power station management system may alternatively control the mobile image capturing terminal to first collect the image data of the photovoltaic module 30, until the image data corresponding to the photovoltaic module 1 is obtained through collection.

Optionally, after obtaining image data of one photovoltaic module through collection, the mobile image capturing terminal sends the image data obtained through collection to the power station management system, and collects image data of a next photovoltaic module under control of the power station management system. After receiving the image data sent by the mobile image capturing terminal, the power station management system determines, based on the image data, a fault status of the photovoltaic module corresponding to the image data.

Optionally, the photovoltaic power generation system provided in this embodiment of this application further includes a mobile image capturing terminal. The mobile image capturing terminal may be configured to collect image data of a to-be-detected photovoltaic module under control of the power station management system, and sequentially collect image data of other photovoltaic modules. The mobile image capturing terminal may be an unmanned aerial vehicle.

Based on a same technical concept, as shown in FIG. 4, an embodiment of this application further provides an apparatus for performing fault detection. The apparatus 400 for performing fault detection may include a processing unit 401.

The processing unit 401 may be configured to: control, in a preset photovoltaic module order by using an inverter connected to a current to-be-detected photovoltaic module, the current to-be-detected photovoltaic module to be in a target status, and when determining that the current to-be-detected photovoltaic module is in the target status, control a mobile image capturing terminal to collect image data of the current to-be-detected photovoltaic module, where the image data is used to detect a fault status of the current to-be-detected photovoltaic module; and
when determining that the mobile image capturing terminal obtains the image data of the current to-be-detected photovoltaic module through collection, continue to control, in the preset photovoltaic module order by using an inverter connected to a next to-be-detected photovoltaic module, the next to-be-detected photovoltaic module to be in the target status, until image data of all to-be-detected photovoltaic modules is obtained through collection.

Optionally, the apparatus 400 for performing fault detection may further include a transceiver unit 402, and the processing unit 401 may be configured to control the transceiver unit 402 to send a first control signal to the inverter connected to the current to-be-detected photovoltaic module. The first control signal is used to control the inverter connected to the current to-be-detected photovoltaic module to convert an operating status of the current to-be-detected photovoltaic module to the target status.

Optionally, the processing unit 401 may be configured to control the transceiver unit 402 to send a second control signal to the mobile image capturing terminal. The second control signal is used to control the mobile image capturing terminal to move to a location of the current to-be-detected photovoltaic module, and to collect the image data of the current to-be-detected photovoltaic module.

Optionally, the transceiver unit 402 may be configured to receive a status parameter of the current to-be-detected photovoltaic module sent by the inverter connected to the current to-be-detected photovoltaic module. The processing unit 401 may be configured to determine, based on the status parameter received by the transceiver unit 402, whether the to-be-detected photovoltaic module is in the target operating status.

Optionally, the transceiver unit 402 may be further configured to receive image data collected by the mobile image capturing terminal. The processing unit 401 may be further configured to determine, based on the image data received by the transceiver unit 402, a fault status of a to-be-detected photovoltaic module corresponding to the received image data.

Division into units in embodiments of this application is an example and is merely logical function division, and there may be another division manner during actual implementation. In addition, the functional units in the embodiments of this application may be integrated into one processor, each of the units may exist alone physically, or two or more units are integrated into one module. The integrated module may be implemented in a form of hardware, or may be implemented in a form of a software functional module.

Based on a same technical concept, an embodiment of this application further provides a photovoltaic power generation system. For example, a structure of the photovoltaic power generation system may be the same as that of the photovoltaic power generation system shown in FIG. 1.

Optionally, the photovoltaic power generation system may include a plurality of photovoltaic modules, a plurality of inverters, and a power station management system.

The plurality of photovoltaic modules are connected to the plurality of inverters, and the power station management system is connected to the plurality of inverters.

Optionally, the plurality of photovoltaic modules may convert light energy into direct current electric energy, and output the direct current energy to the connected inverter. The plurality of inverters may be configured to: convert the received direct current electric energy into alternating current electric energy, and output the alternating current electric energy to an external device. The power station management system may be configured to monitor operating statuses of the plurality of inverters, and can be configured to perform the method for performing fault detection shown in FIG. 2. For example, the power station management system may be a processor chip.

An embodiment of this application provides a computer-readable storage medium storing a computer program. The computer program includes instructions used to perform the foregoing method embodiments.

An embodiment of this application provides a computer program product including instructions. When the computer program product runs on a computer, the computer is enabled to perform the foregoing method embodiments.

A person skilled in the art should understand that the embodiments of this application can be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

The computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

Although preferred embodiments of this application have been described, a person skilled in the art can make changes and modifications to the embodiments once they learn the basic inventive concept. Therefore, the following claims are intended to be construed as to cover the preferred embodiments and all changes and modifications falling within the scope of this application.

Clearly, persons skilled in the art can make various modifications and variations to the embodiments of this application without departing from the spirit and scope of the embodiments of this application. In this way, this application is intended to cover the modifications and variations provided that they fall within the protection scope defined by the following claims and their equivalent technologies.

## Claims

1. A method for performing fault detection, applied to a photovoltaic power generation system comprising a plurality of photovoltaic modules, a plurality of inverters, and a power station management system, and comprising:
controlling, by the power station management system in a preset photovoltaic module order by using an inverter connected to a current to-be-detected photovoltaic module, the current to-be-detected photovoltaic module to be in a target status, and when determining that the current to-be-detected photovoltaic module is in the target status, controlling a mobile image capturing terminal to collect image data of the current to-be-detected photovoltaic module, wherein the image data is used to detect a fault status of the current to-be-detected photovoltaic module; and
when determining that the mobile image capturing terminal obtains the image data of the current to-be-detected photovoltaic module through collection, continuing, by the power station management system, to control, in the preset photovoltaic module order by using an inverter connected to a next to-be-detected photovoltaic module, the next to-be-detected photovoltaic module to be in the target status, until image data of all to-be-detected photovoltaic modules is obtained through collection.

2. The method according to claim 1, wherein the controlling, by using an inverter connected to a current to-be-detected photovoltaic module, the current to-be-detected photovoltaic module to be in a target status comprises:
sending a first control signal to the inverter connected to the current to-be-detected photovoltaic module, wherein the first control signal is used to control the inverter connected to the current to-be-detected photovoltaic module to convert an operating status of the current to-be-detected photovoltaic module to the target status.

3. The method according to claim 1 or 2, wherein the controlling a mobile image capturing terminal to collect image data of the current to-be-detected photovoltaic module comprises:
sending a second control signal to the mobile image capturing terminal, wherein the second control signal is used to control the mobile image capturing terminal to move to a location of the current to-be-detected photovoltaic module, and to collect the image data of the current to-be-detected photovoltaic module.

4. The method according to any one of claims 1 to 3, wherein the determining that the current to-be-detected photovoltaic module is in the target operating status comprises:
receiving, by the power station management system, a status parameter of the current to-be-detected photovoltaic module sent by the inverter connected to the current to-be-detected photovoltaic module, and determining, based on the status parameter, whether the current to-be-detected photovoltaic module is in the target operating status.

5. The method according to any one of claims 1 to 4, wherein the method further comprises:
receiving image data collected by the mobile image capturing terminal, and determining, based on the image data, a fault status of a to-be-detected photovoltaic module corresponding to the received image data.

6. The method according to claim 2, wherein the photovoltaic power generation system further comprises a plurality of data collectors connected between the power station management system and the plurality of inverters, and each of the data collectors is connected to some of the plurality of inverters; and
the controlling, by using an inverter connected to a current to-be-detected photovoltaic module, the current to-be-detected photovoltaic module to be in a target status comprises:
sending, by the power station management system, a third control signal to a target data collector, wherein the third control signal is used to control the target data collector to send the first control signal to the inverter connected to the current to-be-detected photovoltaic module, and the inverter connected to the current to-be-detected photovoltaic module is connected to the power station management system by using the target data collector.

7. An apparatus for performing fault detection, comprising a processing unit, wherein
the processing unit is configured to: control, in a preset photovoltaic module order by using an inverter connected to a current to-be-detected photovoltaic module, the current to-be-detected photovoltaic module to be in a target status, and when determining that the current to-be-detected photovoltaic module is in the target status, control a mobile image capturing terminal to collect image data of the current to-be-detected photovoltaic module, wherein the image data is used to detect a fault status of the current to-be-detected photovoltaic module; and
when determining that the mobile image capturing terminal obtains the image data of the current to-be-detected photovoltaic module through collection, continue to control, in the preset photovoltaic module order by using an inverter connected to a next to-be-detected photovoltaic module, the next to-be-detected photovoltaic module to be in the target status, until image data of all to-be-detected photovoltaic modules is obtained through collection.

8. The apparatus according to claim 7, wherein the apparatus further comprises a transceiver unit, and the processing unit is specifically configured to:
control the transceiver unit to send a first control signal to the inverter connected to the current to-be-detected photovoltaic module, wherein the first control signal is used to control the inverter connected to the current to-be-detected photovoltaic module to convert an operating status of the current to-be-detected photovoltaic module to the target status.

9. The apparatus according to claim 8, wherein the processing unit is specifically configured to:
control the transceiver unit to send a second control signal to the mobile image capturing terminal, wherein the second control signal is used to control the mobile image capturing terminal to move to a location of the current to-be-detected photovoltaic module, and to collect the image data of the current to-be-detected photovoltaic module.

10. The apparatus according to claim 8 or 9, wherein the transceiver unit is specifically configured to receive a status parameter of the current to-be-detected photovoltaic module sent by the inverter connected to the current to-be-detected photovoltaic module; and
the processing unit is specifically configured to determine, based on the status parameter received by the transceiver unit, whether the to-be-detected photovoltaic module is in the target operating status.

11. The apparatus according to any one of claims 8 to 10, wherein the transceiver unit is further configured to receive image data collected by the mobile image capturing terminal; and
the processing unit is further configured to determine, based on the image data received by the transceiver unit, a fault status of a to-be-detected photovoltaic module corresponding to the received image data.

12. The apparatus according to any one of claims 8 to 11, wherein the photovoltaic power generation system further comprises a plurality of data collectors connected to the power station management system, and each of the data collectors is connected to some of the plurality of inverters; and
the processing unit is specifically configured to control the transceiver unit to send a third control signal to a target data collector, wherein the third control signal is used to control the target data collector to send the first control signal to the inverter connected to the current to-be-detected photovoltaic module, and the inverter connected to the current to-be-detected photovoltaic module is connected to the power station management system by using the target data collector.

13. A photovoltaic power generation system, comprising a plurality of photovoltaic modules, a plurality of inverters, and a power station management system, wherein
the plurality of photovoltaic modules are connected to the plurality of inverters; and
the power station management system is connected to the plurality of inverters, and the power station management system is configured to perform the method for performing fault detection according to any one of claims 1 to 6.
